# EUROPÄISCHE PATENTSCHRIFT

(11) **EP 0 968 898 B1**
(45) Veröffentlichungstag und Bekanntmachung des Hinweises auf die Patenterteilung: **13.06.2007**
(21) Anmeldenummer: 99112357.1
(22) Anmeldetag: 24.06.1999
(51) Int. Cl.: B61F 5/02, B61F 5/14

(54) **Schienenfahrzeug**
Railway vehicle
Véhicule ferroviaire

(30) Priorität: 01.07.1998 AT 113998
(43) Veröffentlichungstag der Anmeldung: 05.01.2000
(73) Patentinhaber: Connex Verkehr GmbH, 60389 Frankfurt (DE)
(72) Erfinder: Nail, Heinrich, 6200 Jenbach (AT); Köster, Fritz-Botho, Dipl.-Ing., 67806 Rockenhausen (DE)
(74) Vertreter: Torggler, Paul Norbert

(56) Entgegenhaltungen:
- CH-A- 587 142
- DE-A- 2 052 352
- US-A- 4 091 738
- US-A- 4 665 835
- US-A- 4 693 185

## Beschreibung

Die Erfindung betrifft ein Schienenfahrzeug insbesondere Gliederzug mit einem Federsystem bei dem zwischen den Fahrwerken und dem Wagenkasten Luftfedern angeordnet sind, wobei eine Niveaureguliereinrichtung vorgesehen ist, über die in Abhängigkeit vom Einfederweg Luft in die Luftfedern nachfüllbar oder aus diesen ablaßbar ist.

Bei Schienenfahrzeugen ist es bereits bekannt, als Sekundärfederung Luftfedern zu verwenden, wobei eine Niveaureguliereinrichtung vorgesehen ist, über die je nach Bedarf Luft in die Luftfedern nachfüllbar oder aus diesen ablaßbar ist. Dabei ist es bereits bekannt, den Einfederweg zu erfassen und beispielsweise bei Überschreiten desselben Luft nachzufüllen.

Aufgabe der Erfindung ist es, ein Schienenfahrzeug, insbesondere ein Gliederzug der eingangs genannten Gattung zu schaffen, der gute Fahreigenschaften und ein niveaureguliertes Federungssystem aufweist, das auch das problemlose Überfahren von Gleisstellen mit sich ändernder Steigung, beispielsweise Kuppen, erlaubt.

Erfindungsgemäß ist dazu vorgesehen, daß zumindest zwei in Zuglängsrichtung hintereinanderliegende, gesonderte Einachsfahrwerke vorgesehen sind, wobei die Luftfeder(n) des vorderen Einachsfahrwerks mit der bzw. den Luftfeder(n) des hinteren Einachsfahrwerks über eine Luftleitung kommunizieren, und daß die Niveaureguliereinrichtung derart ausgebildet ist, daß sie nur dann Luft in die kommunizierenden Luftfedern des vorderen und hinteren Einachsfahrwerks nachfüllt bzw. daraus abläßt, wenn die Summe der Einfederwege beider Einachsfahrwerke einen vorbestimmten ersten Schwellwert über- bzw. einen vorbestimmten zweiten Schwellwert unterschreitet.

Im Gegensatz zu den bei Eisenbahnwagen weitverbreiteten Drehgestellfahrwerken, bei denen zwei oder mehrere Achsen in einem Drehgestell gelagert sind, welches seinerseits drehbar am Wagenkasten abgestützt ist, ist beim erfindungsgemäßen Schienenfahrzeug, insbesondere Gliederzug, eine Vielzahl von Einachsfahrwerken vorgesehen, die unabhängig voneinander jeweils am Wagenkasten abgestützt sind.

Dabei ist es möglich und sinnvoll, diese Einzelachsfahrwerke paarweise anzuordnen, d. h. jeweils ein vorderes Einzelachsfahrwerk mit relativ kurzem Abstand voneinander vorzusehen und zwischen solchen Einzelachsfahrwerk-Paaren einen größeren Abstand anzuordnen.

Solche Einzelachsfahrwerke sind grundsätzlich bereits bekannt, beispielsweise aus der EP-A1-765 791. Wenn man solche gesonderten Einachsfahrwerke, die sehr gute Fahreigenschaften aufweisen, über gesonderte Luftfedern als Sekundärfedern abfedert, besteht das Problem, eine herkömmliche Niveaureguliereinrichtung, beispielsweise beim bloßen Einfedern des vorderen Einachsfahrwerkes eines Einachsfahrwerk-Paares, ansprechen würde, wenn z. B. das Schienenfahrzeug auf eine Geländekuppe od. dgl. trifft. Um dies zu vermeiden, kommunizieren die Luftfedern der vorderen und hinteren Einachsfahrwerke gemäß der Erfindung, wodurch ein Pendeln der Luftsäule zwischen den vorderen und hinteren Luftfedern ermöglicht wird. Der Zug kann damit problemlos über Geländekuppen od. dgl. fahren. Dennoch kann eine Niveaureguliereinrichtung vorgesehen sein. Diese ist erfindungsgemäß aber so ausgebildet, daß sie nicht auf den Einfederweg eines einzelnen Einachsfahrwerkes anspricht, sondern nur auf die Summe der Einfederwege, damit können die einzelnen Einachsfahrwerke im wesentlichen unabhängig federn, ohne daß es zu einem unerwünschten Ansprechen der Niveaureguliereinrichtung kommt. Erst dann, wenn beispielsweise durch eine erhöhte Belastung beide, nämlich das vordere und das hintere Einachsfahrwerk über einen Schwellwert einfedern, wenn also die Summe der Einfederwege größer ist als dieser Schwellwert, wird Luft in die Luftfedern nachgefüllt. Das gleiche passiert in umgekehrter Weise bei einem Unterschreiten der Summe des Einfederweges des vorderen und hinteren Einachsfahrwerkes, wobei dann eben Luft abgelassen wird.

Die Niveaureguliereinrichtung kann in an sich bekannter Weise ein mit den Luftfedern in Verbindung stehendes Ventil aufweisen, daß die Luftfeder wahlweise mit dem Druckluftspeicher (zum Nachfüllen) oder mit Atmosphäre (zum Entlüften) verbindet. Als robuste Ventile eignen sich insbesonders Drehschieberventile.

Die erfindungsgemäße Summenbildung der Einfederwege kann grundsätzlich auf verschiedene Weisen realisiert werden, beispielsweise über elektrische Wegaufnehmer und eine angeschlossene Recheneinheit. Wegen der geringen Störanfälligkeit wird jedoch derzeit ein mechanisches System, beispielsweise über Gestänge und/oder Seilzüge vorgezogen, bei dem die Summe der Einfederwege eben einfach aufgrund der mechanisch geometrischen Verhältnisse gebildet wird. Dies ist beispielsweise dadurch möglich, daß das Ventil ein Gehäuse und ein relativ dazu bewegliches Betätigungsorgan aufweist, daß das Gehäuse beweglich gelagert ist und seine Lage über Gestänge und/oder Seilzüge od. dgl. in Abhängigkeit vom Einfederweg des einen der Einzelachsfahrwerke zwangsgesteuert ist, und daß das Betätigungsorgan in seiner Lage über Gestänge und/oder Seilzüge od. dgl. in Abhängigkeit vom Einfederweg des anderen der Einzelachsfahrwerke zwangsgesteuert ist.

Die erfindungsgemäße Lösung funktioniert prinzipiell bei einer Luftfeder im vorderen Einachsfahrwerk und einer Luftfeder im hinteren Einachsfahrwerk. Häufig ist es aber günstig, jedes Einzelachsfahrwerk links und rechts der Wagenmitte jeweils über mindestens eine Luftfeder abzustützen. In diesem Fall ist es zum Vermeiden eines Wankens des Schienenfahrzeuges um die Längsachse bevorzugt, wenn die linken und rechten Luftfedersysteme voneinander getrennt sind. Damit kann die Luftsäule zwar zwischen der vorderen und hinteren linken Luftfeder einerseits pendeln und zwischen der rechten vorderen und hinteren Luftfeder andererseits pendeln, quer zur Fahrtrichtung ist jedoch ein freies Pendeln der Luftsäule nicht möglich. Es kann aber trotzdem zwischen dem linken und rechten Luftkreis ein Überdruckventil vorgesehen sein, das bei Überschreiten einer gewissen Druckdifferenz zwischen der linken und rechten Wagenseite öffnet und somit einen Druckausgleich herbeiführt. Dies ist vor allem auch bei einem Totalausfall der linken oder rechten Federungsseite wichtig, damit das Schienenfahrzeug nicht zu sehr schräg gestellt wird. Bei einem solchen Totalausfall der Luftfeder kann das Schienenfahrzeug auf an sich bekannte Notfedern absinken.

Weitere Vorteile und Einzelheiten der Erfindung werden anhand der nachfolgenden Figurenbeschreibung näher erläutert.
Die Fig. 1 zeigt ein erfindungsgemäßes Schienenfahrzeug in einer Seitenansicht,
die Fig. 2 zeigt schematisch den pneumatischen Kreis der Luftfedern von zwei hintereinanderliegenden Einzelachsfahrwerken,
die Fig. 3 zeigt die wesentlichen Bestandteile einer mechanischen Niveaureguliereinrichtung,
die Fig. 4 zeigt schematisch ein weiteres Ausführungsbeispiel mit hydraulischen Notlagern bzw. Notfedern.

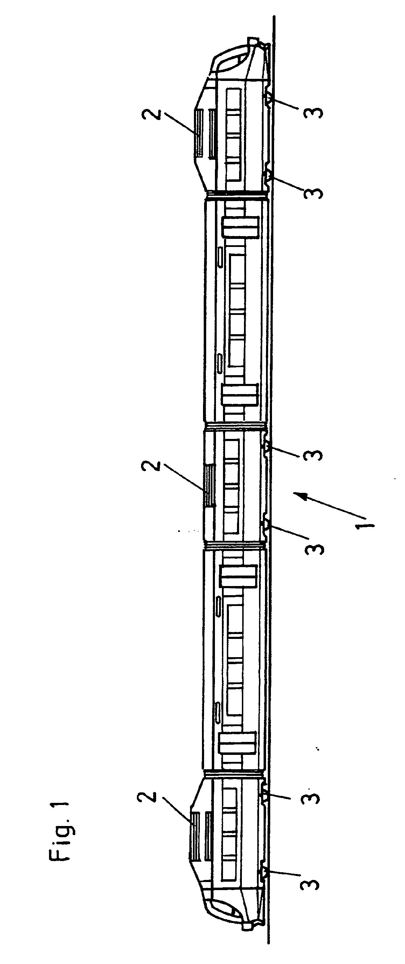

Das in Fig. 1 dargestellte erfindungsgemäße Schienenfahrzeug ist bei diesem Ausführungsbeispiel ein Gliederzug 1. Dieser weist drei Wageneinheiten 2 auf, welche mit Rädern 3 ausgestattet sind, wobei die Räder 3 in gesonderten Einachsfahrwerken gelagert sind. Jedes Einachsfahrwerk ist beim dargestellten Ausführungsbeispiel über im folgenden noch näher beschriebene Luftfedern links und rechts der Wagenmitte gegenüber dem Wagenkasten abgestützt.

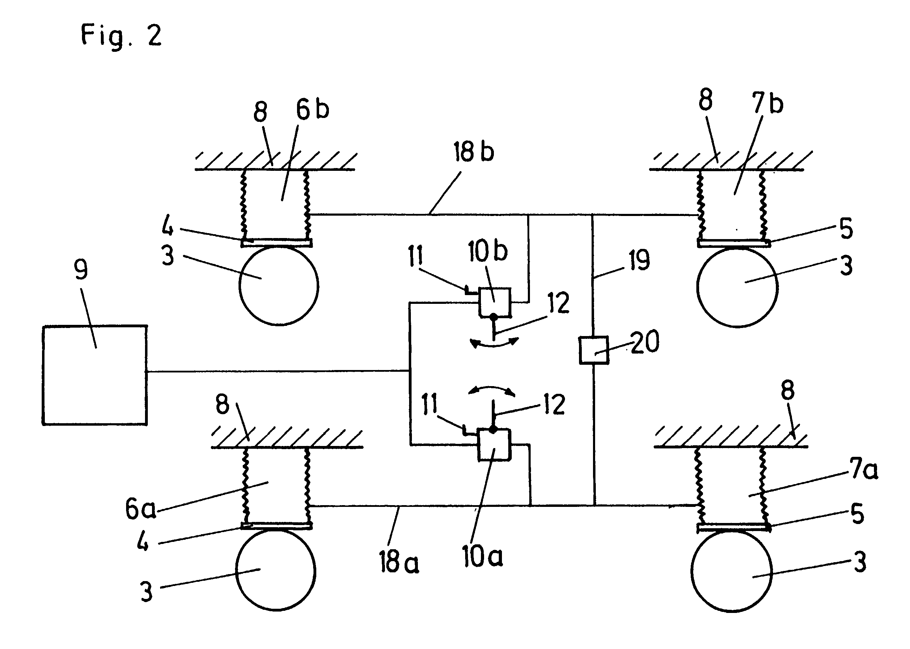

Die Fig. 2 zeigt die Räder 3 eines Einachsfahrwerk-Paares, wobei das vordere Einachsfahrwerk schematisch mit 4 angedeutet ist und das hintere Einachsfahrwerk mit 5 bezeichnet ist. Diese Einachsfahrwerke 4, 5 sind jeweils über Luftfedern 6a, 6b, 7a und 7b gegenüber dem Wagenkasten 8 abgefedert, der ebenfalls schematisch angedeutet ist.

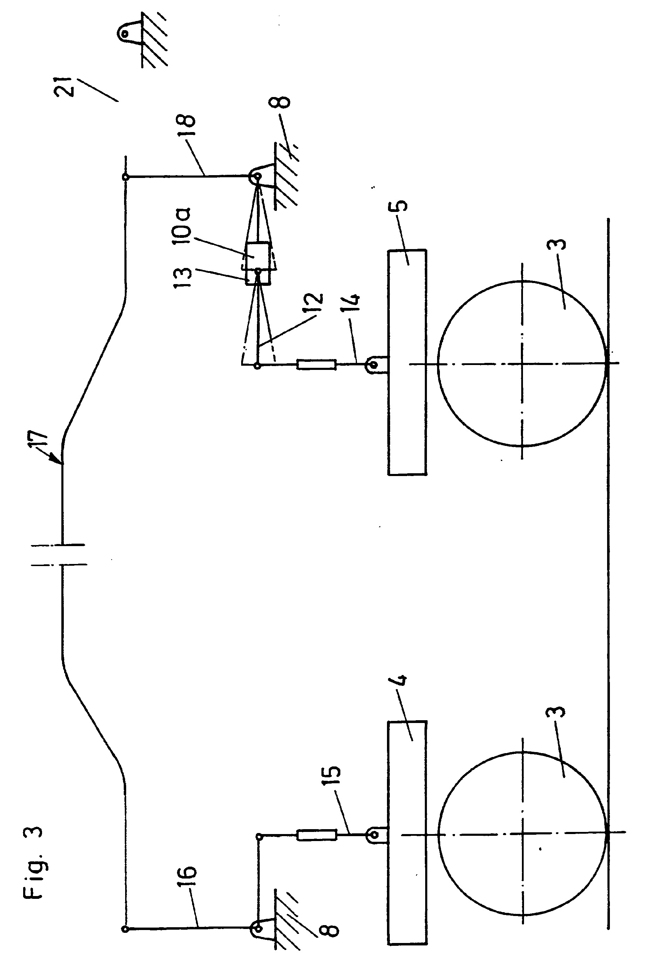

Die Luftfedern 6a, 6b, 7a, 7b werden aus einem Druckspeicher 9 mit Druckluft versorgt und zwar über Ventile 10a und 10b. Diese Ventile 10a und 10b sind Teil einer Niveaureguliereinrichtung, die im folgenden anhand der Fig. 3 noch näher beschrieben wird. Aufgabe der Ventile 10a und 10b ist es, wahlweise Luft aus dem Druckluftspeicher 9 zum Nachfüllen in die Luftfedern 6a, 6b, 7a und 7b einzufüllen oder Luft aus diesen Luftfedern über einen Auslaß 11 an die Umgebung (Atmosphäre) zum Entlüften abzugeben. Die Ventile 10a und 10b können dabei über Betätigungsorgane 12 gesteuert werden, beispielsweise über schwenkbar gelagerte Hebel. Dabei kann das Ventil 10a bzw. 10b bei in Mittelstellung befindlichem Hebel 12 vollkommen gesperrt sein, dies entspricht der normalen Fahrtstellung. Zum Nachfüllen der Luft aus dem Vorratsbehälter 9 kann der Hebel 12 in die eine Richtung zum Entlüften von Luft aus den Druckfedern 6a, 6b, 7a und 7b in die andere Richtung verschwenkt werden. Um den mittleren Bereich herum kann eine "Totzone" sein, in der sich der Hebel 12 bewegen kann, ohne daß es zu einem Nachfüllen oder zu einem Entlüften kommt. Jene Hebelstellung, ab der es dann zu einem Nachfüllen bzw. auf der anderen Seite zu einem Entlüften kommt, entspricht dann jeweils einem Schwellwert für das Ansprechen der Niveaureguliereinrichtung.

Der Clou der Erfindung besteht nun darin, diesen Betätigungshebel 12 nicht in Abhängigkeit vom Einfederweg eines einzelnen Einachsfahrwerkes 4 oder 5 zu steuern, sondern in Abhängigkeit von der (vektoriellen) Summe der Einfederwege des vorderen 4 und hinteren 5 Einachsfahrwerks. Diese Summe kann auf die verschiedensten Weisen gebildet werden.

Nach dem Ausführungsbeispiel der Fig. 3 geschieht dies durch ein mechanisches System (Gestänge und Seilzug). In Fig. 3 sind die Luftfedern der Übersichtlichkeit halber nicht dargestellt, außerdem ist nur der mechanische Teil der Niveaureguliereinrichtung der linken Seite der Fig. 2 dargestellt, insbesondere das Niveauregulierventil 10a.

Das Gehäuse dieses Ventils 10a ist mit 13 bezeichnet, das Betätigungsorgan 12 (Hebel) ist gegenüber dem Gehäuse 13 schwenkbar gelagert.

Der Betätigungshebel 10 steht über eine in der Länge justierbare Stange 14 mit dem hinteren Einachsfahrwerk 5 gelenkig in Verbindung.

Das Gehäuse 13 des Ventils 10a steht mit dem vorderen Einachsfahrwerk in mechanischer Zwangsverbindung und zwar über die in ihrer Länge justierbare Stange 15, den L-förmig ausgebildeten und am Wagenkasten 8 drehbar gelagerten Umlenkhebel 16, einen vorzugsweise als Bowdenzug ausgeführten Übertragungselement 17 und einem zweiten L-förmig ausgebildeten ebenfalls am Wagenkasten 8 drehbar gelagerten Umlenkhebel 18. Wenn das vordere Einachsfahrwerk 4 einfedert, geht der Hebel 15 nach oben, der Umlenkhebel 16 verschwenkt gegen den Uhrzeigersinn und überträgt diese Bewegung über das Übertragungselement 17 auf den Umlenkhebel 18, der damit ebenfalls gegen den Uhrzeigersinn verschwenkt und damit das Gehäuse 13 des Ventils 10a nach unten bewegt.

Diese mechanische Niveaureguliereinrichtung funktioniert folgendermaßen: Wenn nur das vordere Einachsfahrwerk 4 einfedert, bleibt der Betätigungshebel 12 stehen und das Gehäuse 13 des Ventils 10a bewegt sich nach unten. Dadurch kommt es bereits zu einer Relativbewegung zwischen dem Hebel 12 und dem Gehäuse 13. Das Ventil 10a ist jedoch so ausgelegt, daß diese Auslenkung des Hebels 12 relativ zum Gehäuse 13 noch zu keiner Öffnung des Ventils, weder zur Atmosphäre noch zum Druckbehälter führt (mittlerer "Totbereich"). Ähnlich verhält sich die Sache, wenn nur das hintere Einachsfahrwerk einfedert. Dann bleibt das Gehäuse 13 des Ventils 10a stehen und der Betätigungshebel 12 schwenkt nach oben, allerdings wiederum nur in einem Ausmaß, das zu keiner Öffnung des Ventils 10a führt.

Damit das Ventil 10a entweder zum Druckbehälter 9 oder zur Atmosphäre hin öffnet, bedarf es eines größeren Ausschlags des Betätigungsorgans 12 gegenüber dem Gehäuse 13. Dieser Ausschlag entspricht beim dargestellten Ausführungsbeispiel im wesentlichen der Summe der Einfederwege des vorderen und hinteren Einachsfahrwerkes 4, 5. Federt nämlich das vordere Einachsfahrwerk 4 ein, geht das Gehäuse 13 in der beschriebenen Weise nach unten. Federt gleichzeitig das hintere Einachsfahrwerk 5 ein, geht der Hebel 12 nach oben. Damit kommt es zwischen dem Gehäuse 13 und dem Hebel 12 zu einer Verschwenkung, die größer ist als der genannte "Totbereich". Überschreitet also die Summe der beiden Einfederwege einen vorbestimmten ersten Schwellwert, so öffnet das Ventil 10a zum Druckbehälter 9 hin und es wird Luft in die Luftfedern nachgefüllt. Analoges gilt für einen zu kleinen Einfederweg. Wenn dieser in der Summe zu klein ist, wird Luft aus den Luftfedern abgelassen.

Die in Fig. 2 dargestellte rechte Seite mit den Luftfedern 6b und 7b ist mit den zentralen Ventilen 10b analog aufgebaut. Wie bereits erwähnt, ist es günstig die linke und rechte Federseite 6a, 7a bzw. 6b, 7b im wesentlichen voneinander zu trennen. Damit ist zwar auf jeder Fahrwerksseite über die Luftleitung 18a bzw. 18b ein Pendeln der Luftsäule zwischen der jeweils vorderen und hinteren Luftfeder möglich. Ein Pendeln der Luftsäule in Querrichtung zum Fahrzeug ist jedoch unterbunden, wodurch ein übermäßiges Wanken vermieden wird. Dennoch kann die linke und die rechte Luftkreisseite über eine Verbindungsleitung 19 und ein Überdruckventil 20 miteinander verbunden sein, um bei zu großen Druckdifferenzen zwischen links und rechts einen Ausgleich zu schaffen.

Unter weiterer Bezugnahme auf Fig. 3 ist noch eine Feder 21 vorgesehen, die bei einem Ausfall des mechanischen Übertragungssystems zum vorderen Einachsfahrwerk 4 Umlenkhebel 18 im Uhrzeigersinn verschwenkt. Und zwar in einem beträchtlichen Ausmaß, sodaß es in jedem Fall zu einer Entlüftung des Systems führt. Damit sinkt der Wagen auf an sich bekannte Notfedern herab, gleichzeitig kann natürlich ein Warnsignal abgegeben werden. Der Wagen bleibt jedoch zumindest mit geringerer Geschwindigkeit fahrbereit.

Die Erfindung ist selbstverständlich nicht auf die dargestellten Ausführungsbeispiele beschränkt, beispielsweise wäre es möglich, anstelle der mechanischen Wegaufnehmer für den Einfederweg elektrische Wegaufnehmer vorzusehen, wobei dann die Summe der Einfederwege auch rechnerisch ermittelt werden könnte. Auch ist es denkbar, anstelle der mechanischen Gestänge und Bowdenzüge ein pneumatisches oder hydraulisches Übertragungssystem zu verwenden. Anstelle der Feder 21 könnte auch ein anderes Sicherheitssystem verwendet werden, beispielsweise ein solches, das durch das Eigengewicht einer Masse das Ventil 13 im Schadensfall in eine Entlüftungsstellung bringt.

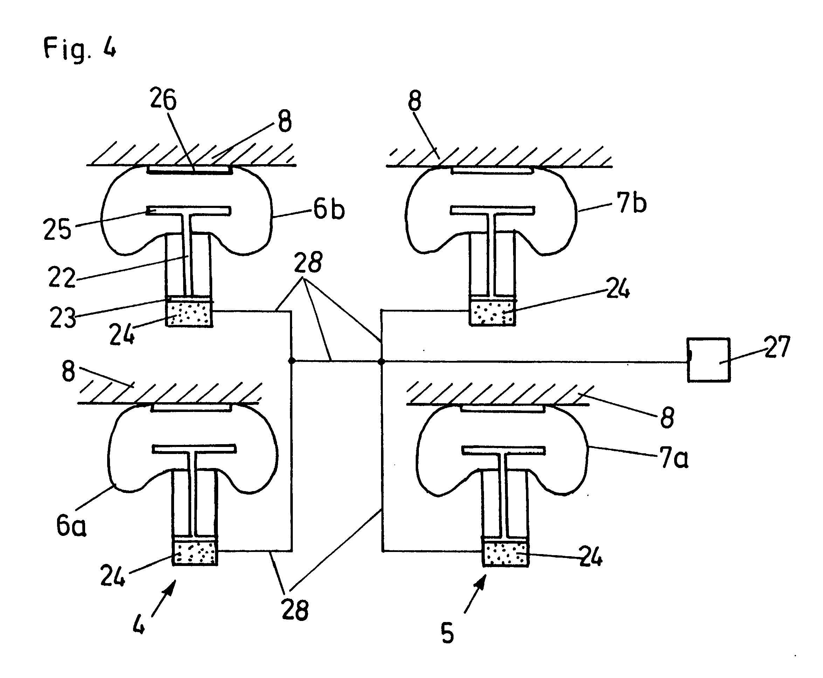

In Fig. 4 ist schematisch das Federungssystem zweier benachbarter Einzelfahrwerke gemäß einer weiteren Ausführungsform dargestellt, wobei dieses Federungssystem günstigerweise, aber nicht notwendigerweise, mit dem in Fig. 2 dargestellten Einrichtungen zum Befüllen und Entleeren der Luftfedern bzw. deren Kommunikation ausgestattet sein kann. Diese Einrichtungen sind in Fig. der Übersichtlichkeit halber nicht dargestellt, weil in Fig. 4 hauptsächlich ein Notlager bzw. ein Notfedersystem beschrieben werden soll. Dieses System umfaßt bei jeder Luftfeder 6a, 6b, 7a, 7b einen Hydraulikstempel 22, der unten einen Kolben 23 aufweist, welcher über einer Kammer 24 angeordnet ist. Der Stempel ist oben als Auflager 25 ausgebildet. Wenn die Luftfedern nicht mehr funktionieren (Störfall), sinkt der Wagenkasten 8 mit der Auflage 26 auf das Auflager 25 ab. Über eine Einrichtung 27 kann die Höhe des Auflagers 25 reguliert werden. Besonders vorteilhaft ist bei der dargestellten Ausführungsform die Tatsache, daß die Kammern 24 der einzelnen Notfedern der Luftfedern über Leitungen 28 miteinander kommunizieren, sodaß die Hydraulikflüssigkeit von einer Kammer in die andere Kammer übertreten kann. Dies erlaubt auch im Notfederbetrieb, also bei ausgefallener Luftfeder, ein Überfahren von Kuppen.

## Patentansprüche

1. Schienenfahrzeug (1), insbesondere Gliederzug mit einem Federsystem bei dem zwischen den Fahrwerken (3) und dem Wagenkasten (2) Luftfedern angeordnet sind, wobei eine Niveaureguliereinrichtung vorgesehen ist, über die in Abhängigkeit vom Einfederweg Luft in die Luftfedern nachfüllbar oder aus diesen ablaßbar ist, **dadurch gekennzeichnet, daß** zumindest zwei in Zuglängsrichtung hintereinanderliegende, gesonderte Einachsfahrwerke vorgesehen sind, wobei die Luftfeder(n) (6a, 6b) des vorderen Einachsfahrwerks (4) mit der bzw. den Luftfeder(n) (7a, 7b) des hinteren Einachsfahrwerks (5) über eine Luftleitung (18a, 18b) kommunizieren, und daß die Niveaureguliereinrichtung derart ausgebildet ist, daß sie nur dann Luft in die kommunizierenden Luftfedern (6a, 7a; 6b, 7b) des vorderen und hinteren Einachsfahrwerks nachfüllt bzw. daraus abläßt, wenn die Summe der Einfederwege beider Einachsfahrwerke (4, 5) einen vorbestimmten ersten Schwellwert über- bzw. einen vorbestimmten zweiten Schwellwert unterschreitet.

2. Schienenfahrzeug nach Anspruch 1, **dadurch gekennzeichnet, daß** die Niveaureguliereinrichtung zumindest ein mit den Luftfedern in Verbindung stehendes Ventil aufweist (10a, 10b), das die Luftfedern wahlweise mit einem Druckluftspeicher (9) (Nachfüllen) oder mit Atmosphäre (Entlüften) verbindet.

3. Schienenfahrzeug nach Anspruch 2, **dadurch gekennzeichnet, daß** das Ventil (10a, 10b) ein Drehschieberventil ist.

4. Schienenfahrzeug nach einem der Ansprüche 1 bis 3, **dadurch gekennzeichnet, daß** ein im wesentlichen der Summe der Einfederwege entsprechender Ausschlag mechanisch über Gestänge (14, 15, 16, 18) und/oder Seilzüge (17) od. dgl. gebildet wird.

5. Schienenfahrzeug nach Anspruch 4 und einem der Ansprüche 2 oder 3, **dadurch gekennzeichnet, daß** das Ventil (10a, 10b) ein Gehäuse (13) und ein relativ dazu bewegliches Betätigungsorgan (12) aufweist, daß das Gehäuse beweglich gelagert ist und seine Lage über Gestänge und/oder Seilzüge od. dgl. in Abhängigkeit vom Einfederweg des einen der Einzelachsfahrwerke zwangsgesteuert ist, und daß das Betätigungsorgan in seiner Lage über Gestänge und/oder Seilzüge od. dgl. in Abhängigkeit vom Einfederweg des anderen der Einzelachsfahrwerke zwangsgesteuert ist.

6. Schienenfahrzeug nach einem der Ansprüche 1 bis 5, daß jedes Einzelachsfahrwerk links und rechts der Wagenmitte jeweils über mindestens eine Luftfeder (6a, 6b, 7a, 7b) am Wagenkasten (8) abgestützt ist und daß die linken Luftfedern (6a, 7a) des vorderen und hinteren Einzelachsfahrwerks einerseits und die rechten Luftfedern (6b, 7b) des vorderen und hinteren Einzelachsfahrwerks andererseits jeweils über gesonderte Luftleitungen kommunizieren.

7. Schienenfahrzeug nach Anspruch 6, **dadurch gekennzeichnet, daß** der Luftkreis der linken Luftfedern (6a, 7a) und der Luftkreis der rechten Luftfedern (6b, 7b) über ein Überdruckventil in Verbindung stehen.

8. Schienenfahrzeug nach einem der Ansprüche 1 bis 7, **gekennzeichnet durch** eine Sicherheitseinrichtung, die bei Störungen der Niveauregulierung die Luftfedern (6a, 6b, 7a, 7b) entlüftet.

9. Schienenfahrzeug nach Anspruch 8, **dadurch gekennzeichnet, daß** die Sicherheitseinrichtung eine Feder (21) umfaßt, die über eine vorzugsweise mechanische Kopplung auf ein Ventil (10a, 10b) wirkt und dieses in Richtung "Entlüften" vorbelastet.

10. Schienenfahrzeug nach einem der Ansprüche 1 bis 9, bei dem jede Luftfeder mit einem Notlager ausgestattet ist, auf die der Wagenkasten bei Ausfall der Luftfeder absinkt, **dadurch gekennzeichnet, daß** jedes Notlager einen Hydraulikstempel (22, 23, 25) als Auflager umfaßt, wobei die mit Hydraulikflüssigkeit gefüllten Kammern (24) der Hydraulikstempel von mindestens zwei verschiedenen Fahrwerken (4, 5) kommunizieren.

## Claims

1. A rail vehicle (1), in particular an articulated train, having a spring system in which pneumatic springs are arranged between the chassis (3) and the carriage body (2), wherein there is provided a level regulating device by way of which air can be introduced into the pneumatic springs or let out of same in dependence on the suspension travel, **characterised in that** there are provided at least two separate single-axle chassis which are disposed in succession in the longitudinal direction of the train, wherein the pneumatic spring or springs (6a, 6b) of the front single-axle chassis (4) communicate with the pneumatic spring or springs (7a, 7b) of the rear single-axle chassis (5) by way of an pneumatic line (18a, 18b), and that the level regulating device is so designed that it introduces air into and lets air out of the communicating pneumatic springs (6a, 7a; 6b, 7b) of the front and rear single-axle chassis only when the sum of the suspension travels of both single-axis chassis (4, 5) exceeds a predetermined first threshold value or falls below a predetermined second threshold value.

2. A rail vehicle according to claim 1 **characterised in that** the level regulating device has at least one valve (10a, 10b) which communicates with the pneumatic springs and which connects the pneumatic springs selectively to a compressed air storage means (9) (filling) or atmosphere (venting).

3. A rail vehicle according to claim 2 **characterised in that** the valve (10a, 10b) is a rotary slide valve.

4. A rail vehicle according to one of claims 1 to 3 **characterised in that** a deflection substantially corresponding to the sum of the suspension travels is formed mechanically by way of linkages (14, 15, 16, 18) and/or cable lines (17) or the like.

5. A rail vehicle according to claim 4 and one of claims 2 and 3 **characterised in that** the valve (10a, 10b) has a housing (13) and an actuating member (12) movable relative thereto, that the housing is movably mounted and its position is positively controlled by way of linkages and/or cable lines or the like in dependence on the suspension travel of one of the single-axle chassis and that the actuating member is positively controlled in respect of its position by way of linkages and/or cable lines or the like in dependence on the suspension travel of the other of the single-axle chassis.

6. A rail vehicle according to one of claims 1 to 5 **characterised in that** each single-axle chassis is supported against the carriage body (8) to the left and the right of the carriage centre respectively by way of at least one pneumatic spring (6a, 6b, 7a, 7b) and that the left pneumatic springs (6a, 7a) of the front and rear single-axle chassis on the one hand and the right pneumatic springs (6b, 7b) of the front and rear single-axle chassis on the other hand respectively communicate by way of separate pneumatic lines.

7. A rail vehicle according to claim 8 **characterised in that** the pneumatic circuit of the left pneumatic springs (6a, 7a) and the pneumatic circuit of the right pneumatic springs (6b, 7b) communicate by way of a pressure relief valve.

8. A rail vehicle according to one of claims 1. to 7 **characterised by** a safety device which vents the pneumatic springs (6a, 6b, 7a, 7b) in the event of faults in level regulation.

9. A rail vehicle according to claim 8 **characterised in that** the safety device includes a spring (21) which acts on a valve (10a, 10b) by way of a preferably mechanical coupling and pre-loads the valve in the 'venting' direction.

10. A rail vehicle according to one of claims 1 to 9 wherein each pneumatic spring is fitted with an emergency mounting on to which the carriage body sinks upon failure of the pneumatic spring, **characterised in that** each emergency mounting includes a hydraulic strut (22, 23, 25) as the support, the chambers (24), which are filled with hydraulic fluid, of the hydraulic struts of at least two different chassis (4, 5) communicating.

## Revendications

1. Véhicule sur rail (1), notamment train articulé, comportant un système de suspension dans lequel des ressorts pneumatiques sont disposés entre les bogies (3) et la caisse (2), un dispositif de régulation de niveau étant prévu, par l'intermédiaire duquel de l'air peut être admis dans les ressorts pneumatiques ou évacué de ceux-ci en fonction de la distance de compression, **caractérisé en ce qu'**il est prévu au moins deux bogies à un essieu séparés situés l'un derrière l'autre dans la direction longitudinale du train, le (les) ressort(s) pneumatique(s) (6a, 6b) du bogie à un essieu avant (4) communiquant avec le (les) ressort(s) pneumatique(s) (7a, 7b) du bogie à un essieu arrière (5) par une conduite d'air (18a, 18b), et **en ce que** le dispositif de régulation de niveau est agencé de telle sorte qu'il n'admet de l'air dans ou évacue de l'air des ressorts pneumatiques (6a, 7a ; 6b, 7b) communicants des bogies à un essieu avant et arrière que lorsque la somme des distances de compression des deux bogies à un essieu (4, 5) dépasse une première valeur de seuil prédéterminée ou est inférieure à une deuxième valeur de seuil prédéterminée.

2. Véhicule sur rail selon la revendication 1, **caractérisé en ce que** le dispositif de régulation de niveau comporte au moins une vanne (10a, 10b) qui est en liaison avec les ressorts pneumatiques, qui relie facultativement les ressorts pneumatiques à un accumulateur d'air comprimé (9) (remplissage d'appoint) ou à l'atmosphère (purge).

3. Véhicule sur rail selon la revendication 2, **caractérisé en ce que** la vanne (10a, 10b) est une vanne à tiroir tournant.

4. Véhicule sur rail selon l'une des revendications 1 à 3, **caractérisé en ce qu'**une distance de compression correspondant sensiblement à la somme des distances de compression est formé mécaniquement par l'intermédiaire de tringleries (14, 15, 16, 18) et/ou de tirants à câble (17) ou analogues.

5. Véhicule sur rail selon la revendication 4 et l'une des revendications 2 ou 3, **caractérisé en ce que** la vanne (10a, 10b) comporte un corps (13), et un organe d'actionnement (12) qui est mobile par rapport à celui-ci, **en ce que** le corps est monté de façon mobile, **en ce que** sa position est commandée par force en fonction de la distance de compression de l'un des bogies à un essieu par l'intermédiaire de tringleries et/ou de tirants à câble ou analogues, et **en ce que** la position de l'organe d'actionnement est commandée par force en fonction de la distance de compression de l'autre bogie à un essieu par l'intermédiaire de tringleries et/ou de commandes à câble ou analogues.

6. Véhicule sur rail selon l'une des revendications 1 à 5, **caractérisé en ce que** chaque bogie à un essieu est supporté sur la caisse de wagon (8) à gauche et à droite du milieu du wagon par l'intermédiaire d'au moins un ressort pneumatique (6a, 6b, 7a, 7b), et **en ce que**, d'une part les ressorts pneumatiques de gauche (6a, 7a) des bogies à un essieu avant et arrière, et d'autre part les ressorts pneumatiques de droite (6b, 7b) des bogies à un essieu avant et arrière, communiquent respectivement par l'intermédiaire de conduites d'air séparées.

7. Véhicule sur rail selon la revendication 6, **caractérisé en ce que** le circuit d'air des ressorts pneumatiques de gauche (6a, 7a), et le circuit d'air des ressorts pneumatiques de droite (6b, 7b), sont reliés entre eux par l'intermédiaire d'une soupape de surpression.

8. Véhicule sur rail selon l'une des revendications 1 à 7, **caractérisé par** un dispositif de sécurité, qui purge les ressorts pneumatiques (6a, 6b, 7a, 7b), lors de perturbations de la régulation de niveau.

9. Véhicule sur rail selon la revendication 8, **caractérisé en ce que** le dispositif de sécurité comporte un ressort (21) qui agit sur une vanne (10a, 10b), de préférence par l'intermédiaire d'un accouplement mécanique, et exerce une précontrainte sur cette vanne dans le sens de la "purge".

10. Véhicule sur rail selon l'une des revendications 1 à 9, dans lequel chaque ressort pneumatique est doté d'un palier de secours, sur lequel la caisse de wagon est abaissée lors d'une défaillance du ressort pneumatique, **caractérisé en ce que** chaque palier de secours comporte un piston hydraulique (22, 23, 25) en tant que support, les chambres (24) remplies de liquide hydraulique des pistons hydrauliques d'au moins deux bogies différents (4, 5) communiquant entre elles.
